# EUROPEAN PATENT SPECIFICATION

(11) **EP 1 012 081 B1**
(45) Date of publication and mention of the grant of the patent: **24.10.2001**
(21) Application number: 95937254.1
(22) Date of filing: 09.10.1995
(51) Int. Cl.: B65G 33/32

(54) **SHAFT SEAL, ESPECIALLY FOR SCREW CONVEYORS FOR POWDERED MATERIAL**
ANTRIEBSWELLEN-DICHTRING, INSBESONDERE FÜR PULVER-SCHRAUBEN-FÖRDERER
JOINT D'ARBRE, EN PARTICULIER POUR DES TRANSPORTEURS A VIS DESTINES A DES PRODUITS PULVERULENTS

(43) Date of publication of application: 28.06.2000
(73) Proprietor: Underhalls- Och Anläggningsteknik I Haninge AB, 149 30 Nynäshnamn (SE)
(72) Inventor: NILSSON, Lars-Gösta, S-136 40 Haninge (SE)
(74) Representative: Karlsson, Leif Karl Gunnar
(86) International application number: SE9501160
(87) International publication number: WO9713713

(56) References cited:
- SE-A- 9 401 210
- US-A- 4 270 762
- US-A- 4 328 973
- US-A- 4 365 707
- DERWENT'S ABSTRACT, No. 87-48579/07, week 8707; & SU,A,1 239 047, (POWER EQUIPT RES IN), 23 June 1986.

## Description

The present invention relates to a shaft seal of the kind defined in the preamble of Claim 1.

It is desirable that the shaft seals of screw conveyors will not allow dust to pass through. From an environmental aspect, it is important that the emission of hazardous dust is minimized, for instance when incinerating waste material, when solid-fuel firing with coal and powdered wood, and when grinding different types of seed or grain in flour mills. Endeavours to prevent such emissions have been made by fitting to the end of the screw conveyor a seal of the same type as that used with mushroom valves and V slide valves. However, this type of seal tends to wear down the shaft resulting in the emission of dust into the surrounding room. Coal dust, ash, lime and stone dust are among the worst types of abrasive dust in this regard. The difference is that the screw rotates continuously at a low speed (5-30 r/min.), whereas the valve is manoeuvered only a few times each day, or even only a few times each year. Wear is, therefore, small. The valve stuffing boxes must nevertheless be supplemented or exchanged. This leakage problem has been solved in the case of pumps, with the aid of mechanical seals or stuffing boxes. The latter are allowed to abrade on a so-called abrasion lining, which is replaced after a given number of hours in operation. The stuffing box is changed several times between each replacement of an abrasion lining.

The manufacturers of screw conveyors have not yet been able to solve this problem, which is a serious problem from an environmental and maintenance aspect. This failure means that the screws must be replaced frequently due to wear, and also means that many hours must be spent in cleaning-up environmentally harmful dust, which is liable to damage equipment located in the surroundings. Examples in this respect are dust and ash generated when incinerating waste materials and when firing with coal and powdered wood. Maintenance costs are high, because the abrasion dust wears down the screw shaft and therewith necessitate frequent shaft replacements. The worn shaft must also be repaired, for instance by thermally spraying the shaft, then grinding the sprayed shaft. The repair and replacement of a screw can cost from Swedish kronor 50 thousand to several hundred thousand Swedish kronor, depending on the size of the screw concerned and the operation for which it is intended. In addition, the replacement of a screw involves a stoppage in operation, which reduces equipment availability and lowers production income.

*A prior art shall seal is known from US 4,328,973, which relates to agitator shafts and pump shafts areas, the seal comprising a conventional mechanical seal, in combination with packing of a particular material of construction, configuration and which is held under substantially constant compression, such that when fluid is provided under pressure into a stuffing box containing such packing, the fluid will flow through the packing into the process stream with sufficient velocity to prevent process fluid from flowing back into the stuffing box, and yet with insufficient volume rate of flow to cause significant dilution of the process fluid.*

*An other prior art shall seal is known from US 4,270,762 which relates to a shaft seal including packings inside and outside of a casing wall, through which the shaft extends, in combination with a source of fluid pressure that prevents migration of particles from the casing through the packing.*

The object of the present invention is to solve the aforementioned problem of sealing a shaft, and then especially the shaft of a screw conveyor. This object is achieved with an inventive shaft seal having the characteristic features set forth in the following Claims.

An exemplifying embodiment of the invention will now be described with reference to the accompanying drawing, in which
- Figure 1: is an axial section view of an inventive shaft seal; and
- Figure 2: is a diametric sectional view showing a lubricating barrier ring included in the shaft seal.

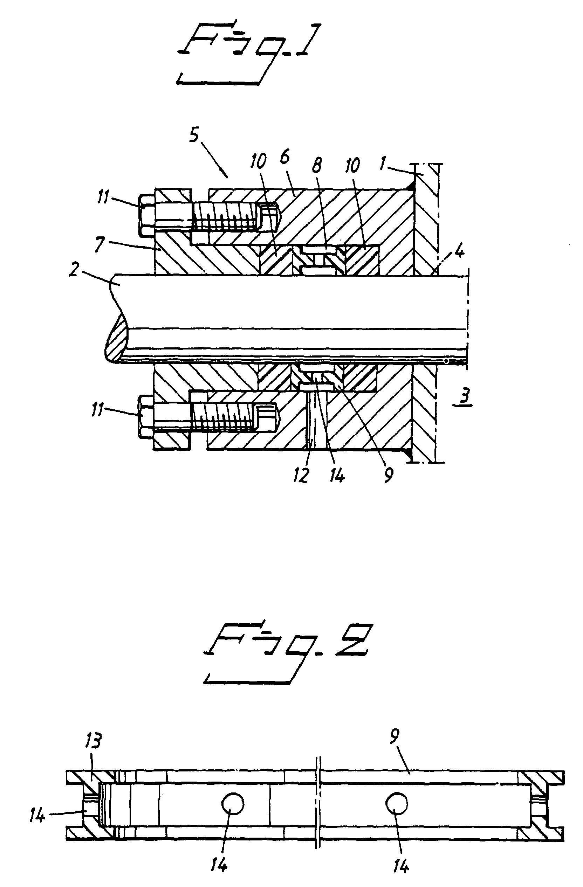

The shaft seal illustrated in Fig. 1 is mounted on the outside of the end-wall 1 of a screw conveyor. The shaft 2 extends through the end-wall 1 to the screw of the conveyor. The shaft seal is intended to prevent dust from exiting from the dust side 3 of the end-wall through the hole 4 accommodating the shaft 2 and includes a stuffing box 5 which is firmly welded to the end-wall. The stuffing box 5 is *comprised of two parts 6 and 7 which can be fitted together and* which define therebetween a sealing chamber 8 around the shaft 2. The sealing chamber 8 accommodates sealing elements in the form of a lubricating barrier ring 9 and a sealing ring 10 mounted on each side of the barrier ring. The sealing elements 9 and 10 are held in position in the stuffing box by means of a screw device 11, with a light abutment pressure. The seal includes a connection 12 through which lubricating grease is introduced into the sealing chamber.

Fig. 2 shows the lubricating barrier ring 9 in larger scale. The ring has an I-shaped cross-section and holes 14 are provided in the web 13 to allow lubricating grease to enter the ring. The holes 14 may be six in number and are disposed uniformly around the periphery of the ring 9, thus at a mutual angular spacing of 60°. The ring 9 may suitably be made of reinforced fiberglass PTFE, i.e. polytetrafluoroethylene plastic. The ring 9 is divided diametrically, to facilitate fitting of the ring. The two sealing rings 10 are suitably comprised of a woven tetrafluoroethylene fabric with long fibres.

The shaft seal is preferably relieved of axial loads. This loading of the shaft seal is effected by journalling the shaft seal radially and axially in roller bearings on both sides of the shaft 2.

The inventive shaft seal functions in the following manner. Lubricating grease is injected through the passageway 12 and enters the barrier ring 9 through the six holes 14 and through the slit that divides the ring diametrically. When the pressure on the grease is appropriately balanced, a small amount of grease will penetrate along the shaft 2 and into the hole in the part 6. The grease pressure is therewith balanced against the pressure on the dust side 3. The grease lubricates the shaft 2 while, at the same time, preventing dust from penetrating into the seal.

The inventive shaft seal prevents dust from escaping and wear is kept very low because the tetrafluoroethylene and grease function to reduce frictional forces to a low level as the shaft slowly rotates, i.e. 5-30 r/min. The seal is not subjected to radially acting forces, since both ends of the shaft are journalled in roller bearings, which take-up both axially and radially acting forces.

The type of lubricating grease used will depend on the purpose and the chemical properties of the dust concerned, e.g. lime, flour, coal, ash, soot, minerals, etc.

A test has been carried out continuously for 33 months on different details. By making changes to measurements, the prototype tested can be adapted to screw conveyors of process industries, lime and mineral screw conveyors and dust conveyors used to handle coal, ash, lime and dust in combined power and heating plants. The invention increases availability and production income. Environmental problems caused by dust on peripheral equipment and by the hazards to people in the surroundings are reduced. Cleaning problems relating to the need for comprehensive cleaning operations are also alleviated, resulting in lower cleaning costs. Since the peripheral equipment is no longer impaired or rendered useless by abrasive dust, the useful life of such equipment is increased.

## Claims

1. A shaft seal, particularly for screw conveyors for powdered materials, comprising a stuffing box (5), which is fitted around a rotatable shaft (2) to be sealed, and which consists of two parts (6, 7), which can be fitted together and which define, around the shaft (2), a sealing chamber (8), which accommodates sealing elements (9, 10), **characterized in that** the sealing elements comprise a *diametrically divided,* lubricating barrier ring (9) *made of reinforced fibreglass and arranged to* be filled with pressurised grease introduced into the sealing chamber (8) under a given, *appropriately balanced* pressure, and a sealing ring (10), comprised of woven tetrafluoroethylene *with long fibres,* on each side of the barrier ring (9) and ***in that** the sealing elements are held in position with a light abutment pressure.*

2. A shaft seal according to Claim 1, **characterized in that** the sealing chamber (8) is provided with a connection (12) for pressurised grease; and **in that** the barrier ring (9) has an I-shaped cross-section provided with a web (13), *and **in that** the web (13) is provided* with holes (14), through which grease can enter into *the barrier ring (9) from the sealing* chamber (8).

3. A shaft seal according to any one of Claims 1-2, **characterized in that** the seal is relieved of axially acting loads by journalling the shaft (2) in roller bearings both radially and axially, on both sides of the shaft seal.

## Patentansprüche

1. Wellendichtung, insbesondere für Pulver-Schrauben-Förderer mit einer Stopfbüchse (5), die um eine abzudichtende, drehbare Welle (2) angeordnet ist und aus zwei Teilen (6, 7) besteht, die zusammengesetzt werden können und um die Welle (2) herum eine Dichtungskammer (8) festlegen, welche Dichtungselemente (9, 10) beinhaltet,
**dadurch gekennzeichnet, daß**
die Dichtungselemente einen im Durchmesser geteilten, Barriere-Schmierring (9) aus verstärktem Fiberglas beinhalten, der so angeordnet ist, daß er unter festgelegtem, entsprechend ausgeglichenem Druck stehendem Schmiermittel, das in die Dichtungskammer eingebracht (8) wird, gefüllt wird, und einem Dichtungsring (10) auf jeder Seite des Barriererings (9), der aus gewebtem Tetrafluorethylen mit langen Fasern besteht, und daß die Versiegelungselemente mit leichtem Gegendruck in Position gehalten werden.

2. Eine Wellendichtung nach Anspruch 1,
**dadurch gekennzeichnet, daß**
die Versiegelungskammer (8) mit einer Verbindung (12) für unter Druck stehendes Schmiermittel versehen ist; und der Barrierering (9) einen I-förmigen Querschnitt mit einem Netz (13) aufweist, und das Netz (13) mit Öffnungen (14) versehen ist, durch welche Schmiermittel zum Barrierering (9) aus der Dichtungskammer (8) eindringen kann.

3. Ein Antriebswellendichtring nach einem der Ansprüche 1-2,
**dadurch gekennzeichnet, daß**
die Dichtung von axial angreifenden Kräften entlastet wird durch Lagerung der Welle (2) in Kugellagern sowohl radial als auch axial auf beiden Seiten des Wellendichtrings.

## Revendications

1. Joint d'arbre, en particulier pour convoyeurs à vis pour matériaux pulvérulents, comprenant un presse-étoupe (5), qui est monté autour d'un arbre rotatif (2) à étanchéifier, et qui consiste en deux parties (6, 7) qui peuvent être assemblées et qui définissent autour de l'arbre (2) une chambre d'étanchéité (8) qui reçoit des éléments d'étanchéité (9, 10), **caractérisé en ce que** les éléments d'étanchéité comprennent une bague de barrière lubrifiante (9) divisée diamétralement et réalisée à partir de fibres de verre renforcées et arrangée pour être remplie de graisse pressurisée introduite dans la chambre d'étanchéité (8) sous une pression donnée équilibrée de manière appropriée, et une bague d'étanchéité (10), formée à partir de tétrafluoréthylène tissé avec de longues fibres, sur chaque côté de la bague de barrière (9) et **en ce que** les éléments d'étanchéité sont maintenus en position avec une légère pression de butée.

2. Joint d'arbre selon la revendication 1, **caractérisé en ce que** la chambre d'étanchéité (8) est pourvue d'une connexion (12) pour de la graisse pressurisée ; et **en ce que** la bague de barrière (9) a une section transversale en forme de I formée avec une âme (13), et **en ce que** l'âme (13) est pourvue de trous (14) à travers lesquels de la graisse peut pénétrer dans la bague de barrière (9) à partir de la chambre d'étanchéité (8).

3. Joint d'arbre selon l'une des revendications 1 ou 2, **caractérisé en ce que** le joint est délesté des charges agissant axialement en montant l'arbre (2) dans des paliers à roulement à la fois radialement et axialement sur les deux côtés du joint d'arbre.
